Europäisches Patentamt

(19) European Patent Office

Office européen des brevets

(11) Publication number: **0 031 194**
**B1**

## (12) EUROPEAN PATENT SPECIFICATION

(45) Date of publication of patent specification: **06.07.83**

(51) Int. Cl.³: **B 29 H 5/00, B 29 H 3/06**

(21) Application number: **80303372.9**

(22) Date of filing: **25.09.80**

(54) Method and apparatus for forming a tyre sidewall protector.

(30) Priority: **17.12.79 PC T/US79/01107**

(43) Date of publication of application:
**01.07.81 Bulletin 81/26**

(45) Publication of the grant of the patent:
**06.07.83 Bulletin 83/27**

(84) Designated Contracting States:
**FR GB IT**

(56) References cited:
**GB - A - 393 805**
**US - A - 1 482 045**
**US - A - 1 482 555**
**US - A - 1 673 505**
**US - A - 1 932 548**
**US - A - 2 339 792**
**US - A - 2 346 335**
**US - A - 2 748 425**
**US - A - 2 763 028**
**US - A - 3 486 198**
**US - A - 3 517 410**

(73) Proprietor: **CATERPILLAR TRACTOR CO.**
**100 Northeast Adams Street**
**Peoria Illinois 61629 (US)**

(72) Inventor: **Kizer, Richard W.**
**361 East Greenwood Street**
**Morton Illinois 61550 (US)**
Inventor: **Anderson, Arlynn W.**
**1113 West Loucks Avenue**
**Peoria Illinois 61604 (US)**
Inventor: **Unty, Robert W.**
**212 Lakeshore Drive**
**Hanna City Illinois 61536 (US)**

(74) Representative: **Brunner, Michael John et al,**
**GILL JENNINGS & EVERY 53-64 Chancery Lane**
**London WC2A 1HN (GB)**

Method and apparatus for forming a tyre sidewall protector

The invention relates to a method and apparatus for forming a tyre sidewall protector.

Sidewall protectors are used on some large earthmoving tyres being operated in rocky conditions where the sidewalls of the tyres are susceptible to abrasion and cutting. The sidewall protectors are usually made of rubber and are contoured to conform to the bulge in the sidewall of the tyres. Mounting holes are commonly provided at the radially inner periphery for fastening the sidewall protectors to the rim on which the tyre is mounted.

One problem associated with such sidewall protectors is that of how to build them economically on a production basis with a high degree of uniformity. Although several existing techniques currently used for building a tyre carcass with strips of extruded rubber can be utilized in the building operation, the completely different structure poses problems not encountered in the building of tyres. For example, the sidewall protectors have a plurality of mounting holes at their radially inner periphery. Additionally some sidewall protectors have a pair of side ribs concentric with and adjacent their inner periphery. Since tyres do not have comparable mounting holes or the equivalent of the ribs, new apparatus and procedures are required for forming such holes and ribs.

In one aspect of the present invention, a method of forming a tyre sidewall protector includes the steps of providing uncured elastomeric material on a first surface of a mould for moulding one side facing surface of the sidewall protector; moving a plate having one side facing the mould first surface towards the mould to mould a portion of the other side facing surface of the sidewall protector to form a mounting portion of the sidewall protector; piercing the mounting portion of the uncured sidewall protector with punches on the plate to form a plurality of holes in the mounting portion; and connecting the plate to the mould with the mounting portion of the tyre sidewall protector sandwiched therebetween.

In another aspect of the present invention, apparatus for use in such a method comprises a mould having a first surface for moulding one side facing surface of the tyre sidewall protector; a plate having one side facing the mould first surface for moulding a portion of the other side facing surface of the tyre sidewall protector; a plurality of punches on the plate and extending from the one side of the plate; means for defining a central opening in the tyre sidewall protector; and means for resiliently biassing the plate towards the mould to cause the punches to pierce the tyre sidewall protector.

The method may further comprise the steps of placing the mould, sidewall protector, and plate in a vulcanizing apparatus; and curing the sidewall protector.

This apparatus and method solve the problem of how to build sidewall protectors and form the mounting portion thereof on a production basis with a high degree of uniformity, by providing a mould, on which the basic sidewall protector is formed, and a separate plate for forming the mounting portion of the sidewall protector while it remains on the mould.

Since uncured rubber has a high resistance to flow, resiliently biassing the plate toward the mould enables movement of the plate to the final finish position to take place during the curing process wherein the rubber is heated to a vulcanizing temperature at which rubber flows more easily.

An example of an apparatus and a method in accordance with the present invention will now be described with reference to the accompanying drawings, in which:—

Figure 1 is a partial side elevation;

Figure 2 is an enlarged view of a portion of the apparatus shown in Figure 1;

Figure 3 is an enlarged section taken on the line III—III in Figure 1, also showing a linear actuator; and,

Figure 4 shows a part of the apparatus of Figure 3 but with certain elements in another position.

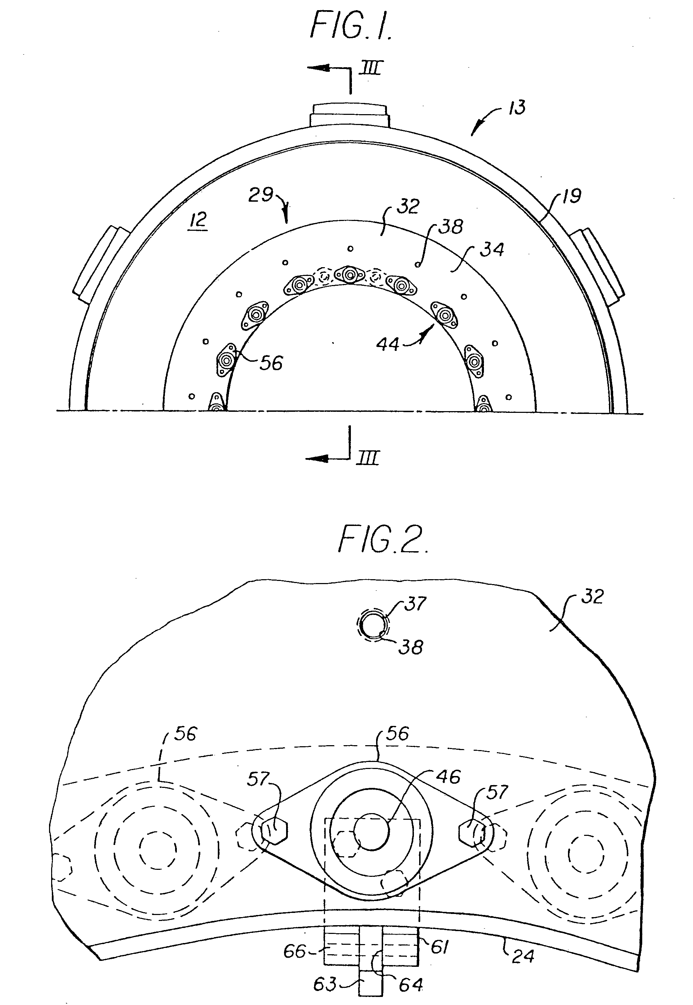

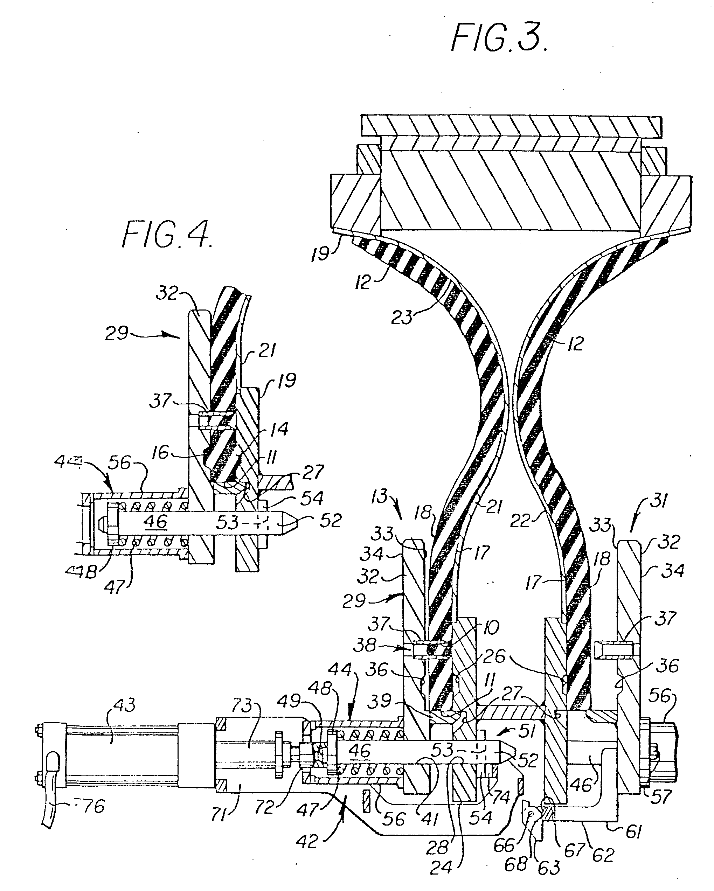

Referring now to Figures 1 and 3 of the drawings, an apparatus for forming mounting holes 10 and a central opening 11 in a tyre sidewall protector 12, is generally indicated by the reference numeral 13. The apparatus also forms a pair of annular ribs, 14, 16 extending laterally outwardly from side surfaces 17, 18 of the sidewall protector 12 and a concentric with the central opening 11. The apparatus 13 includes a rigid mould 19 having first and second mould portions 21, 22 connected in a back to back relationship by suitable structural members. Since the first and second mould portions are structurally identical only the first mould portion 21 will be described in detail with common reference numerals applied to counterpart elements of the second mould portion 22.

As more clearly shown in Figure 3 the first mould portion 21 has a surface 23 matching the side surface 17 of the sidewall protector 12. The first mould portion has a central opening 24 and a pair of concentric grooves 26, 27 in the surface 23 concentric with the central opening 24. A plurality of holes, one shown at 28, extend through the first mould portion and are arranged in a pattern concentric with the central opening 24.

First and second plate assemblies 29, 31 are releasably connectable to the first and second mold portions 21, 22 respectively. The first plate assembly 29 is shown in Fig. 3 connected to the first mold portion 21 at a position at which the mounting holes 10 are partially formed as will be hereinafter described. The second plate assembly 31 is shown in Fig. 3 loosely connected to the second mold portion 22 prior to its being moved to the position illustrated by the first plate assembly 29 in Fig. 3. In Fig. 4 the first plate assembly 29 is shown connected to the first mold portion 21 and at a position which it will occupy after the sidewall protector 12 is vulcanized as will be hereinafter described.

Since the first and second plate assemblies 29, 31 are structurally identical only the first plate assembly 29 will be described with comparable reference numerals applied to counterpart elements of the second plate assembly 31. The first plate assembly 29 includes an annular plate 32 having opposite sides 33, 34. The side 33 is shaped to match a portion of the other side surface 18 of the sidewall protector 12 and has an annular groove 36 formed therein to form the annular rib 16. A plurality of tubular punches 37 are seated in holes 38 and extend axially outwardly from the side 33. The punches 37 are arranged in a predetermined pattern matching the pattern of the mounting holes 10 in the sidewall protector 12. An annular ring 39 is connected to and extends axially outwardly from the side 33 of the annular plate 32 and provides a means for forming the central opening 11 in the sidewall protector 12. At the position shown in Fig. 4 the distal end of the annular ring 39 extends into the groove 27 which acts as a pilot for precisely aligning the plate 32 relative to the first mold portion 21. A plurality of holes 41 extend through the plate 32 and are positioned in axial alignment with the holes 28 in the first mold portion 21.

A means 42 is provided for moving the first plate assembly 29 toward the first mold portion 21. The means 42 can include, for example, means 44 for resiliently biasing the plate 32 toward the first mold portion 21 in response to being compressed by a linear actuator 43. The resilient biasing means 44 can include a plurality of pins 46 individually slidably extendable through the holes 28, 41, a plurality of springs 47 each encircling one of the pins 46 and positioned between the annular plate 32 and an enlarged head portion 48 at an end 49 of the respective pin, and a means 51 for connecting an opposite end 52 of each pin to the first mold portion 21. The means 51 can include, for example, a hole 53 extending transversely through each pin 46 and a dowel 54 slidably insertable into the hole 53. Each of a plurality of cages 56 surrounds a respective spring 47 and is connected to the annular plate 32 by bolts 57 (Figure 2).

As more clearly shown in Figs. 2 and 3, a pair of L-shaped members 61 are connected to the side 33 of plate 32 (only the member connected to plate 32 of plate assembly 31 is shown). Each member 61 has an arm 62 extendable through the central opening 24 of the first mold portion 21. A lock 63 is positioned within a slot 64 in the respective arm 62 and is pivotally connected to the arm by a pin 66. A stop surface 67 is formed on the lock 63 and is engageable with a stop surface 68, which forms the back surface of the slot 64, for temporarily holding the plate 32 relative to the respective mold portion and for preventing inadvertent separation of the plate 32 from the respective mole portion 21, 22 during the process of disconnecting the plate 32 from the respective mold portion.

The linear actuator 43 is mounted on a frame 71 and has an adapter head 72 connected to a piston rod 73. A pair of rollers, one partially shown at 74, are connected to the frame. Pressurized fluid can be selectively delivered to the actuator 43 through a line 76 from a source of pressurized fluid, not shown, in the usual manner.

In the use of the apparatus 13, with the first and second plate assemblies 29, 31 removed from the mold 19 a pair of the sidewall protectors 12 are laid up in the respective first and second mold portions 21, 22 from extruded strips of uncured rubber while the mold is being rotated about its central axis in a suitable rotating device. Preferably, the inner portions of the sidewall protectors are built slightly oversize to provide an excess of rubber for flowing rubber into the grooves 26, 36 to form the annular ribs 14, 16 during curing.

One of the plate assemblies 29, 31 is then loosely connected to the respective mold portion 21, 22 with the pins 46 being in axial alignment with holes 28 in the mold portion. The frame 71 carrying the linear actuator 43 is then positioned with the rollers 74 in engagement with the backside of the respective mold portion 21, 22 and the adaptor head 72 in engagement with the end 49 of the pin 46. Pressurized fluid is then delivered to the linear actuator 43 through the line 76 causing the piston rod 73 to extend. Extension of the piston rod 73 moves the pin 46 inwardly compressing the spring 47 which biases the plate 32 toward the mold portion and causes the adjacent punches 37 to partially pierce the uncured rubber making up the sidewall protector 12. The degree of penetration by the punches 37 will be limited and will depend on the compression of the spring 47 and the resistance to flow of the uncured rubber. The dowel 54 is inserted into the hole 53 in the pin 46 when the hole 53 becomes visible at the backside of the mold portion. The fluid pressure in the linear actuator 43 is then released leaving the pin 46 in the position shown in Fig. 3 wherein the spring 47 is exerting a biasing force against the plate 32 urging it toward the mold portion.

The frame 71 and hence the linear actuator 43 is then moved to the other pins 46 in any desirable sequence and the above process repeated until all the pins 46 are connected to the mold portion and all of the springs 47 compressed. The plate 32 of the other plate assembly 29, 31 is then connected to the other mold portion 21, 22 and the above process repeated.

When both plate assemblies 29, 31 are connected to the respective first and second mold portions 21, 22 the apparatus 13 is then positioned within a vulcanizing chamber such as an autoclave. Steam is then circulated through the vulcanizing chamber heating the uncured rubber forming the sidewall protectors to a curing temperature. As the temperature of the rubber increases its resistance to flow decreases so that the springs 47 urge the plates 32 toward the respective first and second mold portions 21, 22 thereby completing the piercing of the holes 10. Simultaneously the inner portion of the sidewall protector between the plate 32 and the respective mold portion 21, 22 is squeezed causing the uncured rubber to flow into the grooves 26, 36 forming the annular ribs 14, 16. Also the annular ring 39 enters the groove 27 so that the central opening 11 of the sidewall protector 12 is accurately formed. Engagement of the punches 37 with the respective mold portion serves as a stop for controlling the thickness of the mounting portion of the sidewall protector.

After the sidewall protectors 12 are cured the apparatus 13 is removed from the vulcanizing chamber. The linear actuators 43 are again utilized to compress the springs 47 so that each dowel 54 can be removed from the associated hole 53, thereby uncoupling the pin 46 from the respective mould portion 21. With the lock 63 rotated clockwise 90° from the position shown in Figure 3 the plate assemblies 29, 31 are then removed and the cured sidewall protectors 12 stripped from the first and second mould portions 21, 22.

Although the apparatus 13 is described as having first and second mould portions 21, 22 and first and second plate assemblies 29, 31, in some cases the apparatus can be provided with only one mould portion and one plate assembly. Also, the moving means 42 could be a heavy duty press capable of physically forcing the punches 37 completely through the uncured rubber and causing the uncured rubber to flow into the grooves 26, 36 to form the annular ribs 14, 16 prior to the step of vulcanizing the sidewall protectors.

In view of the foregoing it is readily apparent that an improved method and apparatus is provided for building sidewall protectors and for forming the mounting portion thereof on a production basis with a high degree of uniformity. This is accomplished by providing a mould in which the sidewall protector can be laid up with automated equipment, and providing a separate device for forming the mounting portion of the sidewall protector while it remains in the mould. Furthermore, by resiliently biasing the plate assembly toward the mould so that the final forming of the mounting portion takes place during the curing step, a relatively light weight actuator can be used thereby negating the need for a large and expensive heavy-duty press for moving the plate assembly toward the mould.

## Claims

1. A method of forming a tyre sidewall protector (12), the method including the steps of providing uncured elastomeric material on a first surface (23) of a mould (19) for moulding one side facing surface (17) of the sidewall protector; moving a plate (32) having one side (33) facing the mould first surface towards the mould to mould a portion of the other side facing surface (18) of the sidewall protector to form a mounting portion of the sidewall protector; piercing the mounting portion of the uncured sidewall protector with punches (37) on the plate to form a plurality of holes (10) in the mounting portion; and connecting the plate (32) to the mould with the mounting portion of the tyre sidewall protector (12) sandwiched therebetween.

2. A method according to claim 1, further comprising the steps of placing the mould, sidewall protector (12), and plate (32) in a vulcanizing apparatus; and curing the sidewall protector.

3. A method according to claim 2, characterised in that the plate (32) is resiliently biased towards the mould during the curing step.

4. A method according to claim 3, wherein a plurality of holes (28) are provided in the mould (19), an equal number of holes (41) being provided in the plate (32) in axial alignment with the holes (28) in the mould; and wherein the plate is resiliently biassed towards the mould by a plurality of pins (46) individually slidably extending through respective pairs of holes (28, 41) in the plate (32) and the mould (19), each of the pins having an enlarged head portion (48) at one end, means (51) releasably connecting the other end of the pin (46) to the mould, and a compression spring (47) positioned between the enlarged head portion (48) of the pin (46) and the plate (32), the method further comprising the steps of compressing the plurality of springs (47), and connecting the other end of each pin (46) to the mould (19).

5. Apparatus (13) for use in a method according to claim 3 or claim 4, the apparatus comprising a mould (19) having a first surface (23) for moulding one side facing surface (17) of the tyre sidewall protector; a plate (32) having one side (33) facing the mould first surface (23) for moulding a portion of the other side facing surface (18) of the tyre sidewall protector; a plurality of punches (37) on the plate (32) and extending from the one side (33) of the plate; means (39) for defining a central opening (11) in the tyre sidewall protector (12); and means (44) for resiliently biassing the plate (32) towards the mould (19) to cause the punches (37) to pierce the tyre sidewall protector (12).

6. Apparatus according to claim 5, when dependant on claim 4, further comprising a plurality of cages (56) connected to the plate (32), each of the cages (56) surrounding a respective one of the springs (47).

7. Apparatus according to claim 5 or claim 6, further comprising a linear actuator (43) engageable with the mould and having a movable member (72, 73) adapted for engagement with the one end (49) of one of the pins (46) for compressing the spring (47) associated with the one pin (46).

8. Apparatus according to any of claims 5 to 7, wherein the means (39) for defining the central opening (11) comprises an annular ring (39) mounted on the one side (33) of the plate (32).

9. Apparatus according to claim 8, further comprising an annular groove (27) in the first surface (23) of the mould (19), the groove being positioned to receive the annular ring (39), in use.

10. Apparatus according to any of claims 5 to 9, further comprising a first annular groove (26) in the first surface (23) of the mould (19), and a second annular groove (36) in the one side (33) of the plate (32).

11. Apparatus according to any of claims 5 to 10 for use in a method of forming two tyre sidewall protectors, wherein the mould (19) has a second surface (23) for moulding one side facing surface (17) of another sidewall protector (12), the second surface (23) facing away from the first surface; the apparatus further comprising another plate (32) having one side (33) facing the second mould surface (23) for moulding a portion of the other side facing surface (18) of the another sidewall protector, and another plurality of punches (37) connected to the another plate (32) and extending from the one side (33) of the another plate (32).

**Patentansprüche**

1. Verfahren zum Formen eines Reifen-Seitenwandschutzes (12), wobei das Verfahren folgende Schritte umschließt: Vorsehen eines nicht ausgehärteten Elastomermaterials auf einer ersten Oberfläche (23) einer Form (19) zum Formen einer zur Seite weisenden Oberfläche (17) des Seitenwandschutzes; Bewegung einer Platte (32), die eine Seite (33) aufweist, welche zur ersten Oberfläche der Form hinweist, auf die Form zu, um einen Teil der zur anderen Seite weisenden Oberfläche (18) des Seitenwandschutzes zu formen, um einen Befestigungsteil des Seitenwandschutzes zu bilden; Durchbohren des Befestigungsteils des nicht ausgehärteten Seitenwandschutzes mit Stanzelementen (37) auf der Platte zur Bildung einer Vielzahl von Löchern (10) in dem Befestigungsteil; und Verbindung der Platte (32) mit der Form, wobei der Befestigungsteil des Reifen-Seitenwandschutzes (12) sandwichartig dazwischen angeordnet ist.

2. Verfahren nach Anspruch 1, gekennzeichnet durch die Schritte des Anordnens der Form, des Seitenwandschutzes (12) und der Platte (32) in einer Vulkanisierungsvorrichtung und Aushärten des Seitenwandschutzes.

3. Verfahren nach Anspruch 2, dadurch gekennzeichnet, daß die Platte (32) während des Aushärtschrittes elastisch auf die Form hin vorgespannt ist.

4. Verfahren nach Anspruch 3, wobei eine Vielzahl von Löchern (28) in der Form (19) vorgesehen ist und wobei ferner eine gleiche Anzahl von Löchern (41) in der Platte (32) in Axialausrichtung mit den Löchern (28) in der Form ausgebildet ist, wobei ferner die Platte elastisch zur Form hin vorgespannt ist, und zwar durch eine Vielzahl von Stiften (46), die sich einzeln gleitend durch die entsprechenden Paare von Löchern (28, 41) in der Platte (32) in der Form (19) erstrecken, wobei jeder der Stifte einen verbreiterten Kopfteil (48) an einem Ende aufweist, und wobei ferner Mittel (51) in lösbarer Weise das andere Ende des Stiftes (46) mit der Form verbinden und wobei schließlich eine Druckfeder (47) zwischen dem verbreiterten Kopfteil (48) des Stiftes (46) und der Platte (32) angeordnet ist und wobei das Verfahren ferner die Schritte des Zusammenpressens der Vielzahl von Federn (47) und der Verbindung des anderen Endes jedes Stiftes (46) mit der Form (19) umfaßt.

5. Vorrichtung (13) zur Verwendung in einem Verfahren gemäß Anspruch 3 oder 4, wobei die Vorrichtung folgendes aufweist: Eine Form (19) mit einer ersten Oberfläche (23) zur Ausformung einer zur Seite weisenden Oberfläche (17) des Reifen-Seitenwandschutzes, eine Platte (32) mit einer zur ersten Formoberfläche (23) weisenden Seite (33) zum Ausformen eines Teils der anderen zur Seite weisenden Oberfläche (18) des Reifen-Seitenwandschutzes, eine Vielzahl von Stanzelementen (37) auf der Platte (32) und sich von der einen Seite (33) der Platte aus erstreckend, Mittel (39) zur Definition einer Mittelöffnung (11) in dem Reifen-Seitenwandschutz (12), und Mittel (44) zum elastischen Vorspannen der Platte (32) auf die Form (19) hin, um zu bewirken, daß die Stanzelemente 37 den Reifen-Seitenwandschutz (12) durchbohren.

6. Vorrichtung nach Anspruch 5, bei Abhängigkeit von Anspruch 4, wobei ferner folgendes vorgesehen ist: Eine Vielzahl von mit der Platte (32) verbundenen Käfigen (56), wobei jeder der Käfige (56) eine entsprechende der Federn (47) umgibt.

7. Vorrichtung nach Anspruch 5 oder 6, wobei ferner folgendes vorgesehen ist: Eine Linearbetätigungsvorrichtung (43), die mit der Form in Eingriff bringbar ist und ein bewegliches Glied (72, 73) aufweist, und zwar geeignet für den Eingriff mit dem einen Ende (49) eines der Stifte (46), um die dem einen Stift (46) zugeordnete Feder (47) zusammenzudrücken.

8. Vorrichtung nach einem der Ansprüche 5—7, wobei die Mittel (39) zur Definition der Mittelöffnung (11) einen Ringförmigen Ring (39) aufweisen, und zwar angebracht an der einen Seite (33) der Platte (32).

9. Vorrichtung nach Anspruch 8, wobei ferner eine Ringnut (27) in der ersten Oberfläche (23) der Form (19) vorgesehen ist, und wobei die Nut derart positioniert ist, daß sie im Gebrauch den ringförmigen Ring (39) aufnimmt.

10. Vorrichtung nach einem der Ansprüche 5—9, wobei ferner eine erste Ringnut (26) in der ersten Oberfläche (23) der Form (19) vorgesehen ist, wobei eine zweite Ringnut (36) in der einen Seite (33) der Platte (32) vorgesehen ist.

11. Vorrichtung nach einem der Ansprüche 5—10, zur Verwendung in einem Verfahren zur Ausbildung von zwei Reifen-Seitenwandschutzvorrichtungen, wobei die Form (19) eine zweite Oberfläche (23) aufweist, um die eine zur Seite weisende Oberfläche (17) eines weiteren Seitenwandschutzes (12) auszuformen, wobei die zweite Oberfläche (23) von der ersten Oberfläche wegweist, und wobei ferner die Vorrichtung eine weitere Platte (32) aufweist, und zwar mit einer Seite (33) zur zweiten Formoberfläche (23) hinweisend, um einen Teil der zur anderen Seite weisenden Oberfläche (18) des anderen Seitenwandschutzes auszuformen und wobei ferner eine Vielzahl von Stanzelementen (37) mit der anderen Platte (32) verbunden ist und sich von der einen Seite (33) der anderen Platte (32) aus erstreckt.

## Revendications

1. Procédé de formation d'un protecteur latéral (12) de pneumatique, le procédé comprenant les étapes consistant à apporter un matériau élastomère non durci sur une première surface (23) d'un moule (19) pour mouler une surface tournée d'un côté (17) du protecteur latéral; à déplacer une plaque (32) ayant un côté (33) faisant face à la première surface du moule, vers le moule, pour mouler une partie de la surface tournée de l'autre côté (18) du protecteur latéral, afin de former une partie de montage du protecteur latéral; à percer la partie de montage du protecteur latéral non durci au moyen de poinçons (37) sur la plaque pour former un certain nombre de trous (10) dans la partie de montage; et à connecter la plaque (32) zu moule avec la partie de montage du protecteur latéral (12) de pneumatique prise en sandwich.

2. Procédé selon la revendication 1, comprenant en outre les étapes consistant à placer le moule, le protecteur latéral (12) et la plaque (32) dans un dispositif de vulcanisation; et à durcir le protecteur latéral.

3. Procédé selon la revendication 2, caractérisé en ce que la plaque (32) est sollicitée élastiquement vers le moule pendant l'étape de durcissement.

4. Procédé selon la revendication 3, dans lequel un certain nombre de trous (28) sont prévus dans le moule (19), un nombre égal de trous (41) étant prévus dans la plaque (32) en alignement axial avec les trous (28) dans le moule; et dans lequel la plaque est élastiquement sollicitée vers le moule par un certain nombre de broches (46) s'étendant individuellement de manière coulissante à travers des paires respectives de trous (28, 41) dans la plaque (32) et le moule (19), chacune des broches ayant une partie formant tête élargie (48) à une extrémité, un moyen (51) connectant de façon amovible l'autre extrémité de la broche (46) au moule, et un ressort de compression (47) placé entre la partie formant tête élargie (48) de la broche (46) et la plaque (32), le procédé comprenant en outre les étapes consistant à comprimer les ressorts (47) et à connecter l'autre extrémité de chaque broche (46) au moule (19).

5. Appareil (13) à utiliser dans un procédé selon la revendication 3 ou la revendication 4, l'appareil comprenant un moule (19) ayant une première surface (23) pour mouler une surface tournée d'un côté (17) du protecteur latéral de pneumatique; une plaque (32) ayant un côté (33) faisant face à la première surface (23) du moule pour mouler une partie de la surface tournée de l'autre côté (18) du protecteur latéral du pneumatique; un certain nombre de poinçons (37) sur la plaque (32) s'étendant à partir du côté (33) de la plaque; un moyen (39) pour définir une ouverture centrale (11) dans la protecteur latéral (12) de pneumatique; et un moyen (44) pour solliciter élastiquement la plaque (32) vers le moule (19) afin de forcer les poinçons (37) à percer la protecteur latéral (12) de pneumatique.

6. Appareil selon la revendication 5 dépendant de la revendication 4, comprenant en outre un certain nombre de cages (56) connectées à la plaque (32), chacune des cages (56) entourant un ressort respectif (47).

7. Appareil selon la revendication 5 ou la revendication 6, comprenant en outre un moyen de mise en action linéaire (43) pouvant venir en engagement avec le moule et ayant un organe mobile (72, 73) adapté à un engagement avec l'extrémité (49) de l'une des broches (46) pour comprimer le ressort (47) associé à la broche (46).

8. Appareil selon l'une quelconque des revendications 5 à 7, dans lequel le moyen (39) pour définir l'ouverture centrale (11) comprend une bague annulaire (39) montée sur le côté (33) de la plaque (32).

9. Appareil selon la revendication 8, comprenant en outre une gorge annulaire (27) dans la première surface (23) du moule (19), la gorge étant placée pour recevoir la bague annulaire (39) pendant l'utilisation.

10. Appareil selon l'une quelconque des revendications 5 à 9, comprenant en outre une première gorge annulaire (26) dans la première surface (23) du moule (19), et une seconde gorge annulaire (36) dans le côté (33) de la plaque (32).

11. Appareil selon l'une quelconque des revendications 5 à 10 pour une utilisation dans un procédé de formation de deux protecteurs latéraux de pneumatiques, dans lequel le moule (19) a une seconde surface (23) pour mouler une surface tournée d'un côté (17) d'un autre protecteur latéral (12), la seconde surface (23) étant tournée au loin de la première surface; l'appareil comprenant en outre une autre plaque (32) ayant un côté (33) faisant face à la seconde surface (23) du moule pour mouler une partie de la surface tournée de l'autre côté (18) de l'autre protecteur latéral, et un certain nombre d'autres poinçons (37) connectés à l'autre plaque (32) et s'étendant du côté (33) de l'autre plaque (32).

# FIG.1.

# FIG.2.

1

FIG.3.

FIG.4.